# EUROPÄISCHE PATENTSCHRIFT

(11) **EP 2 626 171 B1**
(45) Veröffentlichungstag und Bekanntmachung des Hinweises auf die Patenterteilung: **29.01.2014**
(21) Anmeldenummer: 13154170.8
(22) Anmeldetag: 06.02.2013
(51) Int. Cl.: B23Q 3/155, B23Q 3/157

(54) **Magazin zur Aufnahme von Bearbeitungswerkzeugen und/oder Bearbeitungsaggregaten**
Magazine for holding machining tools and/or machining units
Magasin destiné à recevoir des outils de traitement et/ou agrégats de traitement

(30) Priorität: 07.02.2012 DE 102012201776
(43) Veröffentlichungstag der Anmeldung: 14.08.2013
(73) Patentinhaber: Homag Holzbearbeitungssysteme GmbH, 72296 Schopfloch (DE)
(72) Erfinder: Matt, Marco, 72250 Wittlensweiler (DE)
(74) Vertreter: HOFFMANN EITLE

(56) Entgegenhaltungen:
- DE-A1- 2 419 472
- DE-A1- 3 331 293
- DE-B3-102008 005 937
- FR-A1- 2 515 948
- FR-A3- 2 527 494
- SU-A1- 1 715 545
- US-A- 3 300 856
- US-A- 3 458 924
- US-A- 4 087 901

## Beschreibung

### Technisches Gebiet

Die Erfindung betrifft ein Magazin zur Aufnahme von Bearbeitungswerkzeugen und/oder Bearbeitungsaggregaten für eine Bearbeitungsvorrichtung, insbesondere ein Bearbeitungszentrum zur Bearbeitung von Werkstücken, die bevorzugt zumindest teilweise aus Holz, Holzwerstoffen, Kunststoff oder dergleichen bestehen, nach dem Oberbegriff von Anspruch 1.

### Stand der Technik

Bearbeitungsvorrichtungen der eingangsgenannten Art finden bei der Herstellung von Möbeln, Küchen oder dergleichen breite Anwendung. Dabei wird als Magazin bevorzugt ein Tellerwechsler eingesetzt, um Werkzeuge für einen Werkzeugwechsel zu speichern. Bei solch einem Wechsel wird ein Werkzeug aus einer Werkzeugspindel in dem Tellerwechsler angelegt und ein anderes Werkzeug aus diesem Tellerwechsel in die Spindel eingesetzt. Ein typischer Tellerwechsler zeichnet sich durch Werkzeugaufnahmen an dem Tellerumfang aus. Tellerwechsler bieten ein einfaches System zur Speicherung von Werkzeugen, wobei der Platzabstand in Abhängigkeit der Werkzeuggröße und die Werkzeuganzahl den Tellerdurchmesser bestimmen. Es werden zum Beispiel 10-fach, 12-fach, 14-fach und 18-fach Tellerwechsler eingesetzt.

Derartige Tellerwechsler haben sich als einfaches und kostengünstiges Magazin zur Aufnahme von Werkzeugen bewährt. Allerdings werden bezüglich der Anzahl an Werkzeugen immer höhere Anforderungen gestellt, sodass die Anzahl der Werkzeugaufnahmen erhöht werden muss. Jedoch kann der Tellerumfang und damit der Durchmesser des Tellers aufgrund der Steifigkeit und der Positioniergenauigkeit des Antriebs nicht beliebig groß gestaltet werden. Deshalb muss dann auf eine alternative Aufnahmemöglichkeit für Werkzeuge ausgewichen werden. Dies kann ein Kettenwechsler mit Umsetzer sein, wobei der Umsetzer dabei zur hauptzeitparallelen Vorbereitung der Werkzeuge für den nächsten Werkzeugwechsel dient. Die Verwendung eines Kettenwechslers ist dabei mit Nachteilen dahingehend verbunden, dass diese deutlich aufwändiger und teurer als Tellerwechsler sind.
Des Weiteren ist in dem Dokument DE 10 2008 005 937 B3 eine Werkzeugmaschine mit einem Maschinengestell mit einer rotierend antreibbaren Werkzeugspindel, mit einer WerkstückSpanneinrichtung und mit einem Magazin vorgesehen. Das Magazin weist ein äußeres Magazinrad und ein koaxial in diesem angeordnetes inneres Magazinrad auf, wobei die Magazinräder unabhängig voneinander gesteuert positionierbar sind.

### Darstellung der Erfindung

Es ist Aufgabe der vorliegenden Erfindung, für ein Magazin, wie zum Beispiel einen Tellerwechsler, die Kapazität zur Aufnahme von Bearbeitungswerkzeugen und/oder Bearbeitungsaggregaten zu erhöhen und dabei bei einfacher Konstruktion eine zufriedenstellende Zugriffsmöglichkeit auf diese Werkzeuge zu ermöglichen.

Die Aufgabe wird erfindungsgemäß durch ein Magazin mit den Merkmalen von Anspruch 1 gelöst. Besonders vorteilhafte Weiterbildungen der Erfindung sind in den abhängigen Ansprüchen angegeben.

Der Erfindung liegt der Gedanke zugrunde, den von einem Tellerwechsler oder sonstigem Magazin eingenommenen Raum effizient zu nutzen.

Zu diesem Zweck ist erfindungsgemäß insbesondere vorgesehen, dass das Magazin zur Aufnahme von Bearbeitungswerkzeugen und/oder Bearbeitungsaggregaten (Werkzeugen) eine erste und zweite Aufnahmeeinrichtung mit entsprechenden ersten und zweiten Aufnahmen für Bearbeitungswerkzeuge und/oder Bearbeitungsaggregate aufweist, wobei die ersten und zweiten Aufnahmen entsprechend an ersten und zweiten Umfängen angeordnet sind, wobei der zweite Umfang kleiner als der erste Umfang ist und der zweite Umfang innerhalb des ersten Umfangs liegt, wenn die Aufnahmeeinrichtungen aus einer Richtung betrachtet werden, die senkrecht zu einer Ebene eines der Umfänge ist.

Auf diese Weise wird ermöglicht, dass "verschwendeter" Raum mit Werkzeugen ausgefüllt wird. Unter diesem Raum ist beispielsweise das Volumen zu verstehen, das sich unter der ersten Aufnahmeeinrichtung ergibt, wenn Werkzeuge in ersten Aufnahmen an dem ersten Umfang angeordnet sind, da die Form und Ausbildung der Werkzeuge meist nicht so gestaltet ist, dass auch das Volumen unter der inneren Fläche der ersten Aufnahmeeinrichtung von den Werkzeugen eingenommen wird, wenn die Werkzeuge nach unten hängend in den ersten Aufnahmen angeordnet sind. Platzersparnis bezüglich der horizontalen Ausdehnung, d.h. bezüglich des Umfangs, kann auch durch ein Magazin gemäß der Erfindung erzielt werden, wenn das Volumen über der ersten Aufnahmeeinrichtung durch eine zweite Aufnahmeeinrichtung ausgenutzt wird.

Die Erfindung erweist sich als besonders vorteilhaft, wenn am zweiten Umfang der zweiten Aufnahmeeinrichtung kleinere Werkzeuge aufgenommen werden. Insgesamt führt dies dazu, dass eine Vergrößerung des Tellers zur Aufnahme weiterer Werkzeuge nicht nötig ist, da eine zweite Aufnahmeeinrichtung vorliegt, welche die weiteren Werkzeuge aufnehmen kann. Dadurch wird erreicht, dass platzsparend und kostengünstig die Kapazität eines Tellerwechslers erhöht wird. Auf ein Ausweichen auf einen Kettenwechsler kann zum Beispiel zunächst verzichtet werden. Gleichzeitig wird eine einfache und zuverlässige Zugriffsmöglichkeit auf die Werkzeuge gewährleistet.

Weitere Merkmale und Vorteile der Erfindung werden anhand der nachfolgenden ausführlichen Beschreibung noch näher ersichtlich werden.

### Kurze Beschreibung der Zeichnungen

- Fig. 1: zeigt eine schematische Draufsicht eines erfindungsgemäßen Magazins;
- Fig. 2: zeigt eine schematische Perspektivansicht eines erfindungsgemäßen Magazins;
- Fig. 3: zeigt eine schematische Perspektivansicht eines erfindungsgemäßen Magazins.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

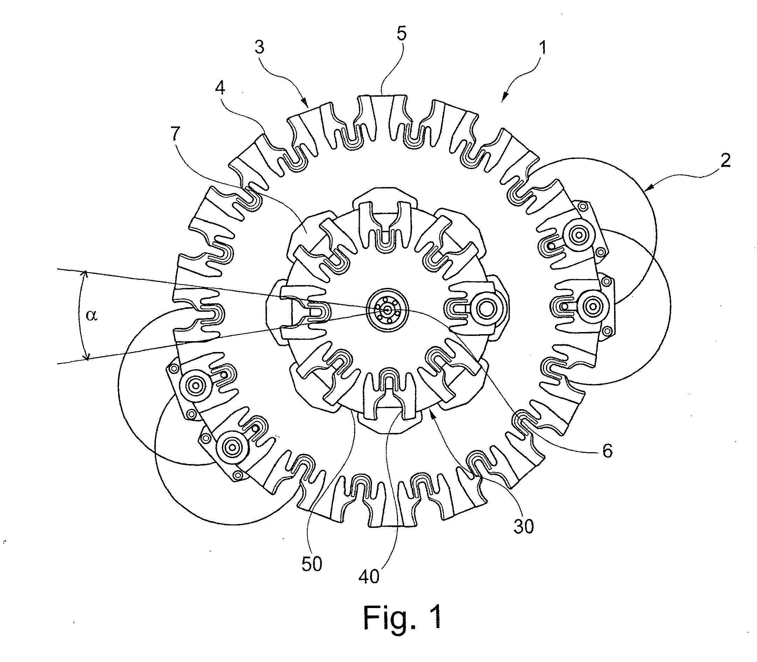

Ein Magazin 1 gemäß der vorliegenden Erfindung ist in Fig. 1 schematisch in einer Draufsicht gezeigt. Bei diesem Magazin 1 handelt es sich in der vorliegenden Ausführungsform um einen Tellerwechsler zur Aufnahme von Bearbeitungswerkzeugen und/oder Bearbeitungsaggregaten (nachfolgend der Einfachheit halber "Werkzeuge") 2 für eine Bearbeitungsvorrichtung bzw. ein Bearbeitungszentrum (nicht gezeigt), das zur Bearbeitung von Werkstücken dient, die bevorzugt zumindest teilweise aus Holzwerkstoffen, Kunststoff oder dergleichen bestehen, wie beispielsweise Möbelfronten, Arbeitsplatten und dergleichen.

Unter den Werkzeugen, die in eine Spindeleinheit (nicht gezeigt) eingesetzt werden können, sind beispielsweise Fräßwerkzeuge, Ziehklingen, Bündigfräßaggregate, Bohreinheiten etc. zu verstehen.

Das Magazin 1 besitzt zunächst eine erste Aufnahmeeinrichtung 3 mit mehreren ersten Aufnahmen 4, in denen die Werkzeuge 2 aufgenommen werden. Vorzugsweise sind die Werkzeuge 2 in diesen Aufnahmen 4 nach unten hängend angebracht. Diese ersten Aufnahmen 4 sind an einem ersten Umfang 5 angeordnet. Vorzugsweise ist unter diesem Umfang der Randbereich der Aufnahmeeinrichtung zu verstehen.

Ferner weist das Magazin 1 eine zweite Aufnahmeeinrichtung 30 mit mehreren zweiten Aufnahmen 40 auf, die ebenfalls Werkzeuge 2 aufnehmen. Diese zweiten Aufnahmen 40 sind an einem zweiten Umfang 50 angeordnet, der kleiner als der erste Umfang 5 ausgebildet ist. Vorzugsweise ist unter dem Umfang der Randbereich der Aufnahmeeinrichtung zu verstehen. Dabei sind die erste 3 und zweite 30 Aufnahmeeinrichtung derart angeordnet, dass der Umfang 40 der zweiten Aufnahmeeinrichtung 30 innerhalb des Umfangs 4 der ersten Aufnahmeeinrichtung 3 liegt, wenn das Magazin aus einer Richtung betrachtet wird, die senkrecht zu der Ebene eines der Umfänge ist, wie in Fig. 1 gezeigt.

Die Ebenen der ersten und zweiten Umfänge sind die Ebenen, die durch die ersten und zweiten Umfänge definiert sind und müssen nicht notwendigerweise parallel zueinander sein, sind es jedoch vorzugsweise. Abhängig von dem ersten Umfang 5 der ersten Aufnahmeeinrichtung 3 und der Größe und den Abmessungen der Werkzeuge 2 ist der zweite Umfang 50 zu wählen. Dabei wird ein Kompromiss zwischen maximaler Platzersparnis, Zugänglichkeit der Werkzeuge und dem Aufwand der technischen Umsetzung zu finden sein.

In diesem Zusammenhang ist auch zu beachten, dass auch mehr als zwei Aufnahmeeinrichtungen vorgesehen sein können. Ferner können die Aufnahmeeinrichtungen - unabhängig von der Anzahl - unterschiedlichste Geometrien aufweisen, einschließlich polygonaler Formen, beispielsweise rechteckig bis hin zu vieleckig.

Insgesamt führt die erfindungsgemäße Ausgestaltung dazu, dass eine Vergrößerung des Tellerumfangs zur Aufnahme weiterer Werkzeuge nicht nötig ist, da eine zweite Aufnahmeeinrichtung vorliegt, welche die weiteren Werkzeuge aufnehmen kann. Dadurch wird erreicht, dass platzsparend und kostengünstig die Kapazität eines Werkzeugmagazins erhöht wird. Gleichzeitig wird eine einfache und zuverlässige Zugriffsmöglichkeit auf die Werkzeuge gewährleistet.

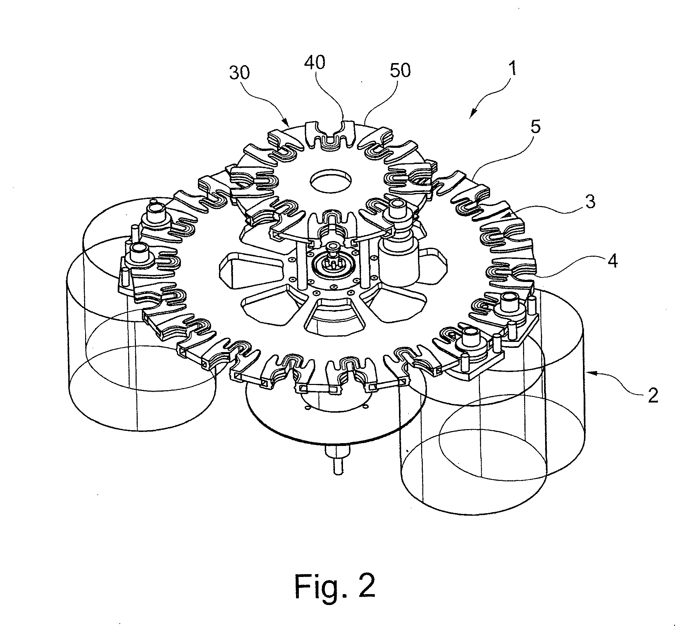

Gemäß einer ersten bevorzugten Ausführungsform ist die zweite Aufnahmeeinrichtung 30 bezüglich der ersten Aufnahmeeinrichtung 3 in einer Richtung senkrecht zu einer Ebene des ersten 5 oder zweiten 50 Umfangs der ersten 3 oder zweiten 30 Aufnahmeeinrichtung versetzt angeordnet. Die zweite Aufnahmeeinrichtung 30 ist dabei zu der ersten Aufnahmeeinrichtung 3 in einem vorbestimmten Abstand versetzt, und zwar bevorzugt nach oben hin versetzt, wie zum Beispiel in Fig. 2 gezeigt. Dieser Abstand wird beispielweise in Anbetracht der Länge der Werkzeuge 2 in der zweiten Aufnahmeeinrichtung 30 festgelegt.

Dadurch wird erreicht, dass die zweite Aufnahmeeinrichtung 30 ein festes Höhenniveau bezüglich der ersten Aufnahmeeinrichtung 3 aufweist, was eine einfache technische Realisierung ermöglicht. Gleichzeitig ist eine leichte Zugänglichkeit der Werkzeuge 2 in den ersten Aufnahmen 4 der ersten Aufnahmeeinrichtung 3 und eine Platzersparnis in der Horizontalen gegeben, da der erste Umfang 5 der ersten Aufnahmeeinrichtung 3 zur Aufnahme weiterer Werkzeuge 2 nicht vergrößert werden muss. Der zweite Umfang 50 der zweiten Aufnahmeeinrichtung 30 sollte dabei vorzugsweise derart bemessen sein, dass die Werkzeuge 2 in den zweiten Aufnahmen 40 die Zugänglichkeit der Werkzeuge 2 in der darunter angeordneten ersten Aufnahmeeinheit 3 nicht behindern.

Gemäß einer zweiten bevorzugten Ausführungsform ist die zweite Aufnahmeeinrichtung 30 bezüglich der ersten Aufnahmeeinrichtung 3 in der Richtung verfahrbar, die senkrecht zu einer Ebene des ersten 5 oder zweiten 50 Umfangs der ersten 3 oder zweiten 30 Aufnahmeeinrichtung ist. Vorzugsweise wird die zweite Aufnahmeeinrichtung 30 nach oben verfahren. Dadurch kann beispielsweise die zweite Aufnahmeeinrichtung 30 derart verfahren werden, dass die Werkzeuge 2 in den ersten 4 und zweiten 40 Aufnahmen leicht durch die Spindel erreicht und gewechselt werden können.

Durch die Verfahrbarkeit der zweiten Aufnahmeeinrichtung 30 wird darüber hinaus die Möglichkeit zur Platzersparnis weiter verbessert, da zum Beispiel, wenn kein Wechsel der Werkzeuge 2 durchgeführt wird, die in der zweiten Aufnahmeeinrichtung 30 aufgenommen sind, der Abstand der zweiten Aufnahmeeinrichtung 30 zur ersten Aufnahmeeinrichtung 3 geringer sein kann, als er nach Ausfahren der Aufnahmeeinrichtung 30, z.B. bei einem Werkzeugwechsel, ist. Dadurch kann vorzugsweise bei geeigneter Gestaltung der ersten Aufnahmeeinrichtung 3 die zweite Aufnahmeeinrichtung 30 auf ein zu dieser ersten Aufnahmeeinrichtung 3 annähernd gleiches Niveau gebracht werden, sodass sich, während kein Werkzeug 2 der zweiten Aufnahmeeinrichtung 30 gewechselt wird, die Werkzeuge 2 in den Aufnahmen 40 der zweiten Aufnahmeeinrichtung 30 in dem Raum unter der ersten Aufnahmeeinrichtung 3 befinden, der nicht durch die Werkzeuge 2 eingenommen wird, die in den Aufnahmen 4 der ersten Aufnahmeeinrichtung 3 aufgenommen sind.

Dabei sind vorzugsweise Aussparungen 7 in der ersten Aufnahmeeinrichtung 3 vorgesehen, in die sich die Werkzeuge 2 in den zweiten Aufnahmen 40 erstrecken können. Der zweite Umfang 50 sollte dann so gestaltet sein, dass die Werkzeuge 2 in den zweiten Aufnahmen 40 innerhalb der Fläche der ersten Aufnahmeeinrichtung 3 liegen, unterhalb der sich keine Werkzeuge 2 in den ersten Aufnahmen 4 befinden.

Bezüglich der Verfahrbarkeit ist zu beachten, dass die erste und die zweite Aufnahmeeinrichtung 3, 30 beide verfahrbar sein können, und zwar bevorzugt unabhängig voneinander.

Gemäß einer dritten bevorzugten Ausführungsform der vorliegenden Erfindung können die erste 3 und zweite 30 Aufnahmeeinrichtung ohne Abstand bezüglich einer Richtung angeordnet sein, die senkrecht zu einer Ebene des ersten 5 oder zweiten 50 Umfangs der ersten 3 oder zweiten 30 Aufnahmeeinrichtung ist. Dies ist so zu verstehen, dass die erste Aufnahmeeinrichtung 3 und die zweite Aufnahmeeinrichtung 30 aneinander bezüglich der Richtung senkrecht zu einer Ebene des Umfangs einer der Aufnahmeeinrichtungen angrenzen.

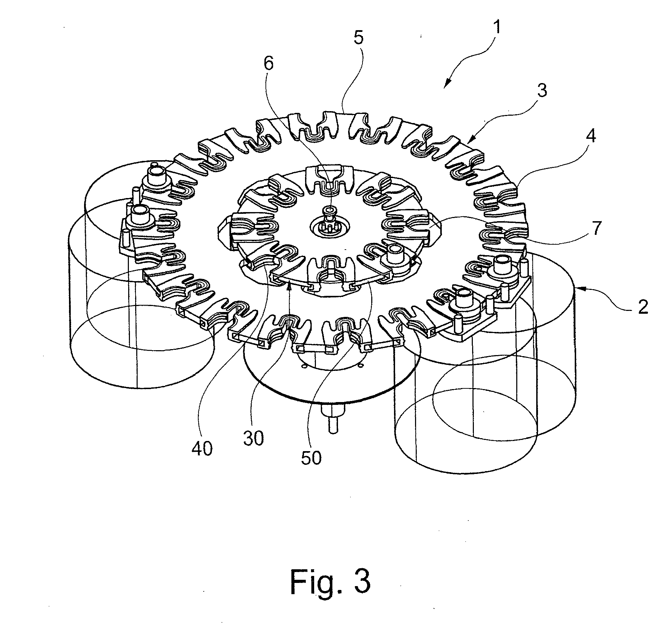

Es ist nicht notwendig, dass die zweite Aufnahmeeinrichtung 30 in dieser Ausführungsform verfahrbar ist. Dabei ist die erste Aufnahmeeinrichtung 3 derart ausgebildet, dass Werkzeuge 2 aus der zweiten Aufnahmeeinrichtung 30 entnommen werden können. Wie zum Beispiel in Fig. 1 und 3 gezeigt, kann die erste Aufnahmeeinrichtung 3 dafür Aussparungen 7 aufweisen, in welche sich die Werkzeuge 2 erstrecken können, die in den zweiten Aufnahmen 40 der zweiten Aufnahmeeinrichtung 30 aufgenommen sind. Bei entsprechender Gestaltung dieser Aussparungen 7 können dann die Spindeleinheiten die Werkzeuge 2 aus der zweiten Aufnahmeeinrichtung 30 entnehmen. Dadurch wird eine technisch einfache Lösung bei maximaler Platzersparnis ermöglicht.

Insbesondere weist das Magazin 1 einen ersten Mittelpunkt der ersten Aufnahmeeinrichtung 3, der durch den ersten Umfang 5 definiert ist, und einen zweiten Mittelpunkt der zweiten Aufnahmeeinrichtung 30 auf, der durch den zweiten Umfang 50 definiert ist. Dabei können vorzugsweise die ersten und zweiten Mittelpunkte nur in der Richtung senkrecht zu den der Ebenen des ersten 5 und zweiten 50 Umfangs der ersten 3 und zweiten 30 Aufnahmeeinrichtung versetzt sein. Es ergibt sich dadurch eine leichtere Anfahrbarkeit der Werkzeuge 2 für die Spindel bei einem Wechsel der Werkzeuge 2.

Weiter vorteilhaft ist die Ausführung des ersten 5 und zweiten 50 Umfangs als Kreisumfang. Dadurch können zum Beispiel die erste 3 und zweite 30 Aufnahmeeinrichtung konzentrisch angeordnet sein. Durch die kreisförmige Gestaltung der Umfänge wird die beste Anfahrbarkeit für die Spindel ermöglicht. Darüber hinaus kann auch die Platzersparnis maximiert werden.

Weiter vorteilhaft ist eine Öffnung der Aufnahmen in eine Richtung, die radial zu der Aufnahmeeinrichtung ist. Die Öffnung wird durch einen Winkel α, wie in Fig. 1 gezeigt, beschrieben, der hier beispielsweise für eine zweite Aufnahme 40 gezeigt ist. Der Öffnungswinkel der Aufnahmen kann somit durch zwei Geraden beschrieben werden, die den Radius der Aufnahmeeinrichtung angeben. Ebenso können auch oder alternativ die ersten Aufnahmen 4 der ersten Aufnahmeeinrichtung 3 radial ausgebildet sein. Dadurch wird insbesondere die Anfahrbarkeit durch die Spindel und die Zugänglichkeit verbessert.

Vorteilhafterweise ist die vorliegende Erfindung mit Aufnahmen gestaltet, die keine Kröpfung aufweisen. Dies bedeutet, dass die Öffnung der Aufnahmen radial zur Aufnahmeeinrichtung ausgebildet ist. Dadurch wird die Anfahrbarkeit durch die Spindel verbessert und eine leichtere Zugänglichkeit ermöglicht.

Typischerweise wird ein Magazin 1, insbesondere ein Tellerwechsler, in einer Bearbeitungsvorrichtung (nicht gezeigt), insbesondere einem Bearbeitungszentrum (nicht gezeigt) zur Bearbeitungen von Werkstücken (nicht gezeigt) eingesetzt, die bevorzugt zumindest teilweise aus Holz, Holzwerstoffen, Kunststoff oder dergleichen bestehen. Dabei dient ein Aufspanntisch (nicht gezeigt) zur Aufspannung der zu bearbeitenden Werkstücke. Eine balkenförmige Führungseinrichtung (nicht gezeigt) ist derart angeordnet, dass sie sich zumindest teilweise über den Aufspanntisch erstreckt. Diese kann auch als Portal oder auf ähnliche Weise konstruiert sein. Der Aufspanntisch und die balkenförmige Führungseinrichtung sind in zumindest einer Richtung zueinander verfahrbar.

An der Führungseinrichtung ist eine Spindeleinheit (nicht gezeigt) verfahrbar angeordnet. Durch Verwendung des Magazins 1 in einer so gestalteten Bearbeitungsvorrichtung können Werkstücke billiger hergestellt werden, da das Magazin 1 kostengünstig viele Werkzeuge aufnehmen kann. Gleichzeitig kann die Bearbeitungsvorrichtung kompakter gestaltet sein, da die Werkzeuge 2 platzsparend in dem Magazin 1 untergebracht sind.

Vorzugsweise sind eine Drehachse 6 des Magazins 1 und eine Drehachse der Spindeleinheit (nicht gezeigt) in gleichem Abstand zur Führungseinrichtung angeordnet. Bei der Ausbildung des Magazins 1 als Tellerwechsler, wie in Fig. 1 gezeigt, können die erste 3 und die zweite Aufnahmeeinrichtung 30 drehbar um eine gemeinsame Drehachse 6 gestaltet sein. Dabei können die erste und zweite Aufnahmeeinrichtung entweder unabhängig voneinander gedreht oder gemeinsam gedreht werden. Dadurch ist ein leichtes Ansteuern und einfaches Wechseln der Werkzeuge 2 möglich.

Bei der Darstellung der Erfindung wurde angegeben, dass die Werkzeuge 2 nach unten hängend in den Aufnahmen angeordnet sind. Ebenso können die Werkzeuge 2 darin aber auch nach oben "stehend" aufgenommen sein. Des Weiteren wurde dargelegt, dass die zweite Aufnahmeeinrichtung 30 nach oben versetzt oder verfahrbar ist. Ebenso ist es auch möglich, dass ein Versetzen oder Verfahren nach unten gegeben ist.

Auch wenn die Erfindung für die Ausgestaltung des Magazins 1 als Tellerwechsler dargestellt wurde, ist klar, dass der Erfindungsgedanke auch andersartige Magazine wie beispielsweise Kettenwechsler umfasst, die zur Aufbewahrung von Werkzeugen 2 dienen und bei denen eine Platzersparnis durch eine erfindungsgemäße Anordnung erreicht werden kann.

Darüber hinaus wird dem Fachmann offensichtlich sein, dass sich die erfindungsgemäßen Vorteile auch auf ein Magazin erstrecken, dass zusätzlich zu ersten und zweiten Aufnahmeeinrichtungen weitere Aufnahmeeinrichtungen aufweist, die gemäß dem Erfindungsgedanken gestaltet sind.

## Patentansprüche

1. Magazin (1) zur Aufnahme von Bearbeitungswerkzeugen und/oder Bearbeitungsaggregaten (2) für eine Bearbeitungsvorrichtung, insbesondere ein Bearbeitungszentrum zur Bearbeitung von Werkstücken, die bevorzugt zumindest teilweise aus Holz, Holzwerkstoffen, Kunststoff oder dergleichen bestehen, mit
einer ersten Aufnahmeeinrichtung (3) mit mehreren ersten Aufnahmen (4) für Bearbeitungswerkzeuge und/oder Bearbeitungsaggregate (2),
wobei die ersten Aufnahmen (4) auf einem ersten Umfang (5) angeordnet sind,
das Magazin (1) ferner eine zweite Aufnahmeeinrichtung (30) mit mehreren zweiten Aufnahmen (40) für Bearbeitungswerkzeuge und/oder Bearbeitungsaggregate (2) aufweist,
die zweiten Aufnahmen (40) auf einem zweiten Umfang (50) angeordnet sind, der kleiner ist als der erste Umfang (5), und
die ersten und zweiten Aufnahmeeinrichtungen (3, 30) derart angeordnet sind, dass, aus einer Richtung betrachtet, die senkrecht zu einer Ebene eines Umfangs (5, 50) der ersten oder zweiten Aufnahmeeinheit (3, 30) ist, der zweite Umfang (50) innerhalb des ersten Umfangs (5) liegt,
**dadurch gekennzeichnet, dass**
die erste Aufnahmeeinrichtung (3) Aussparungen (7) aufweist, in die sich Werkzeuge (2) erstrecken können, die in Aufnahmen (40) der zweiten Aufnahmeeinrichtung (3) aufgenommen sind.

2. Magazin (1) nach Anspruch 1, bei dem die zweite Aufnahmeeinrichtung (30) bezüglich der ersten Aufnahmeeinrichtung (3) in einer Richtung, die senkrecht zu einer Ebene des Umfangs (5, 50) der ersten oder zweiten Aufnahmeeinrichtung (3, 30) ist, und zwar bevorzugt nach oben, versetzt angeordnet ist.

3. Magazin (1) nach Anspruch 1, bei dem die zweite Aufnahmeeinrichtung (30) bezüglich der ersten Aufnahmeeinrichtung (3) verfahrbar in eine Richtung, die senkrecht zu einer Ebene des Umfangs (5, 50) der ersten oder zweiten Aufnahmeeinrichtung (3, 30) ist, und zwar bevorzugt nach oben, angeordnet ist.

4. Magazin (1) nach einem der vorhergehenden Ansprüche, bei dem die erste und die zweite Aufnahmeeinrichtung (3, 30) verfahrbar sind, und zwar bevorzugt unabhängig voneinander.

5. Magazin (1) nach einem der vorhergehenden Ansprüche, bei dem die erste und zweite Aufnahmeeinrichtung (3, 30) in einer Richtung, die senkrecht zu einer Ebene des Umfangs (5, 50) der ersten oder zweiten Aufnahmeeinrichtung (3, 30) ist, ohne Abstand angeordnet sind, und bei dem die erste Aufnahmeeinrichtung (3) derart ausgebildet ist, dass Bearbeitungswerkzeuge und/oder Bearbeitungsaggregate (2) aus der zweiten Aufnahmeeinrichtung (30) entnommen werden können.

6. Magazin (1) nach einem der vorhergehenden Ansprüche, bei dem die erste Aufnahmeeinrichtung (3) einen ersten Mittelpunkt aufweist, der durch den ersten Umfang (5) definiert sind, die zweite Aufnahmeeinrichtung (30) einen zweiten Mittelpunkt aufweist, der durch den zweiten Umfang (50) definiert sind, und diese ersten und zweiten Mittelpunkte nur in der Richtung, die senkrecht zu den Ebenen des ersten und zweiten Umfangs (5, 50) der ersten und zweiten Aufnahmeeinrichtungen (3, 30) ist, versetzt sein können.

7. Magazin (1) nach einem der vorhergehenden Ansprüche, bei dem der erste und der zweite Umfang (5, 50) Kreisumfänge sind.

8. Magazin (1) nach Anspruch 7, bei dem die Öffnungen der Aufnahmen (4, 40) zumindest einer Aufnahmeeinrichtung (3, 30) radial zu der Aufnahmeeinrichtung (3, 30) ausgebildet sind.

9. Magazin (1) nach einem der vorhergehenden Ansprüche, bei dem die Aufnahmen (4, 40) zumindest einer Aufnahmeeinrichtung (3, 30) keine Kröpfung aufweisen.

10. Bearbeitungsvorrichtung, insbesondere Bearbeitungszentrum zur Bearbeitung von Werkstücken, bevorzugt zumindest teilweise aus Holz, Holzwerkstoffen, Kunststoff oder dergleichen, mit:
einem Aufspanntisch zur Aufspannung der zu bearbeitenden Werkstücke,
einer balkenförmigen Führungseinrichtung, die sich zumindest teilweise über den Aufspanntisch erstreckt, wobei der Aufspanntisch und die balkenförmige Führungseinrichtung in zumindest einer Richtung zueinander verfahrbar sind, und
zumindest einer Spindeleinheit, die an der Führungseinrichtung verfahrbar angeordnet ist,
**gekennzeichnet durch** ein Magazin (1) nach einem der Ansprüche 1 bis 9.

11. Bearbeitungsvorrichtung nach Anspruch 10, bei der eine Drehachse (6) des Magazins (1) und eine Drehachse der Spindeleinheit in gleichem Abstand zur Führungseinrichtung angeordnet sind.

## Claims

1. Magazine (1) for holding processing tools and/or processing units (2) for a processing apparatus, in particular a processing centre for processing workpieces which are preferably at least partially made of wood, derived timber products, plastic or the like, having
a first holding device (3) with several first receptacles (4) for processing tools and/or processing units (2),
wherein the first receptacles (4) are arranged on a first circumference (5),
the magazine (1) further has a second holding device (30) with several second receptacles (40) for processing tools and/or processing units (2),
the second receptacles (4) are arranged on a second circumference (50) which is smaller than the first circumference (5), and
the first and second holding devices (3, 30) are arranged in such a way that, seen from one direction which is perpendicular to a plane of a circumference (5, 50) of the first or second holding unit (3, 30), the second circumference (50) lies within the first circumference (5),
**characterised in that**
the first holding device (3) has recesses (7) into which can extend tools (2) which are held in receptacles (40) of the second holding device (3).

2. Magazine (1) according to claim 1, in which the second holding device (30) is offset from the first holding device (3) in a direction which is perpendicular to a plane of the circumference (5, 50) of the first or second holding device (3, 30), and this is preferably upwardly.

3. Magazine (1) according to claim 1, in which the second holding device (30) is movable relative to the first holding device (3) in a direction which is perpendicular to a plane of the circumference (5, 50) of the first or second holding device (3, 30), and this is preferably upwardly.

4. Magazine (1) according to any of the preceding claims, in which the first and second holding devices (3, 30) are movable, this being preferably independently of each other.

5. Magazine (1) according to any of the preceding claims, in which the first and second holding devices (3, 30) are arranged without a gap in a direction which is perpendicular to a plane of the circumference (5, 50) of the first or second holding device (3, 30), and in which the first holding device (3) is designed in such a way that processing tools and/or processing units (2) can be taken out of the second holding device (30).

6. Magazine (1) according to any of the preceding claims, in which the first holding device (3) has a first centre which is defined by the first circumference (5), the second holding device (30) has a second centre which is defined by the second circumference (50), and these first and second centres can be offset only in the direction which is perpendicular to the planes of the first and second circumferences (5, 50) of the first and second holding devices (3, 30).

7. Magazine (1) according to any of the preceding claims, in which the first and second circumferences (5, 50) are circumferences of circles.

8. Magazine (1) according to claim 7, in which the openings of the receptacles (4, 40) of at least one holding device (3, 30) are designed radially to the holding device (3, 30).

9. Magazine (1) according to any of the preceding claims, in which the receptacles (4, 40) of at least one holding device (3, 30) have no offset.

10. Processing apparatus, in particular processing centre for processing workpieces, preferably at least partially made of wood, derived timber products, plastic or the like, having:
a clamping table for clamping the workpieces to be processed,
a beam-like guide device which extends at least partially over the clamping table, wherein the clamping table and the beam-like guide device are movable in at least one direction relative to each other, and
at least one spindle unit which is arranged movably on the guide device,
**characterised by** a magazine (1) according to any of claims 1 to 9.

11. Processing apparatus according to claim 10, in which a rotary shaft (6) of the magazine (1) and a rotary shaft of the spindle unit are arranged at the same distance from the guide device.

## Revendications

1. Magasin (1) destiné à recevoir des outils d'usinage et/ou des agrégats d'usinage (2) pour une installation d'usinage, en particulier pour un centre d'usinage pour l'usinage de pièces préférentiellement au moins partiellement en bois, matériaux ligneux, matières synthétiques ou similaires, comportant
un premier dispositif de réception (3) avec plusieurs premiers logements (4) pour des outils d'usinage et/ou des agrégats d'usinage (2),
lesdits premiers logements (4) étant disposés sur une première périphérie (5),
ledit magasin (1) comportant en outre un deuxième dispositif de réception (30) avec plusieurs deuxièmes logements (40) pour des outils d'usinage et/ou des agrégats d'usinage (2),
les deuxièmes logements (40) étant disposés sur une deuxième périphérie (50) inférieure à la première périphérie (5), et
le premier et le deuxième dispositif de réception (3, 30) étant disposés de sorte que, vue dans une direction perpendiculaire au plan de la périphérie (5, 50) de la première ou de la deuxième unité de réception (3, 30), la deuxième périphérie (50) est comprise à l'intérieur de la première périphérie (5),
**caractérisé en ce que**
le premier dispositif de réception (3) présente des évidements (7) où peuvent s'étendre des outils (2) reçus dans des logements (40) du deuxième dispositif de réception (30).

2. Magasin (1) selon la revendication 1, où le deuxième dispositif de réception (30) est décalé, préférentiellement vers le haut, par rapport au premier dispositif de réception (3) dans une direction perpendiculaire au plan de la périphérie (5, 50) du premier ou du deuxième dispositif de réception (3, 30).

3. Magasin (1) selon la revendication 1, où le deuxième dispositif de réception (30) est déplaçable, préférentiellement vers le haut, par rapport au premier dispositif de réception (3) dans une direction perpendiculaire au plan de la périphérie (5, 50) du premier ou du deuxième dispositif de réception (3, 30).

4. Magasin (1) selon l'une des revendications précédentes, où le premier et le deuxième dispositif de réception (3, 30) sont déplaçables, préférentiellement indépendamment l'un de l'autre.

5. Magasin (1) selon l'une des revendications précédentes, où le premier et le deuxième dispositif de réception (3, 30) ne sont pas espacés dans une direction perpendiculaire au plan de la périphérie (5, 50) du premier ou du deuxième dispositif de réception (3, 30), et où le premier dispositif de réception (3) est réalisé de manière à pouvoir prélever des outils d'usinage et/ou des agrégats d'usinage (2) du deuxième dispositif de réception (30).

6. Magasin (1) selon l'une des revendications précédentes, où le premier dispositif de réception (3) présente un premier point central défini par la première périphérie (5), le deuxième dispositif de réception (30) un deuxième point central défini par la deuxième périphérie (50), et en ce que lesdits premier et deuxième points centraux ne peuvent être décalés que dans la direction perpendiculaire aux plans de la première et de la deuxième périphérie (5, 50) du premier et du deuxième dispositif de réception (3, 30).

7. Magasin (1) selon l'une des revendications précédentes, où la première et la deuxième périphérie (5, 50) sont des circonférences de cercle.

8. Magasin (1) selon la revendication 7, où les ouvertures des logements (4, 40) d'au moins un dispositif de réception (3, 30) sont ménagées radialement au dispositif de réception (3, 30).

9. Magasin (1) selon l'une des revendications précédentes, où les logements (4, 40) d'au moins un dispositif de réception (3, 30) ne sont pas coudés.

10. Installation d'usinage, en particulier centre d'usinage pour l'usinage de pièces préférentiellement au moins partiellement en bois, matériaux ligneux, matières synthétiques ou similaires, comportant :
une table porte-pièce pour le chargement des pièces à usiner,
une dispositif de guidage en forme de barre qui s'étend au moins partiellement au-dessus de la table porte-pièce, ladite table porte-pièce et le dispositif de guidage en forme de barre étant déplaçables l'une par rapport à l'autre dans au moins une direction, et
au moins une unité de broche, disposée de manière à être mobile sur le dispositif de guidage,
**caractérisée par** un magasin (1) selon l'une des revendications 1 à 9.

11. Installation d'usinage selon la revendication 10, où un axe de rotation (6) du magasin (1) et un axe de rotation de l'unité de broche sont pareillement espacés du dispositif de guidage.
